Europäisches Patentamt

European Patent Office

Office européen des brevets

(11) Publication number: **0 501 271 A2**

# EUROPEAN PATENT APPLICATION

(21) Application number: **92102625.8**

(22) Date of filing: **17.02.92**

(51) Int. Cl.⁵: **B32B 15/14**, E04B 1/94

(30) Priority: **25.02.91 US 660304**

(43) Date of publication of application:
**02.09.92 Bulletin 92/36**

(84) Designated Contracting States:
**DE FR GB IT**

(71) Applicant: **HERCULES INCORPORATED**
**Hercules Plaza**
**Wilmington Delaware 19894-0001(US)**

(72) Inventor: **Nelson, Lawrence Lee**
**5532 Doral Drive, Fairway Falls Development**
**Wilmington, Delaware 19808(US)**

(74) Representative: **Lederer, Franz, Dr. et al**
**Lederer, Keller & Riederer, Patentanwälte,**
**Lucile-Grahn-Strasse 22**
**W-8000 München 80(DE)**

(54) Mineral-filled fibrous sheet/foil laminate for use as a flame spread barrier.

(57) Laminates comprising a mineral-filled fibrous sheet and a thermally stable material can be used to protect resin matrix composites as well as other flammable substrates from fire and heat. A preferred laminate comprises a sheet made from mechanically delaminated vermiculite, wood pulp and glass fibers, adhered to aluminum foil.

This invention relates to flame spread barriers for flammable substrates.

Resin matrix composites such as carbon fiber-reinforced epoxy resin composites and glass fiber-reinforced polyester resin composites are used in many transportation, aerospace, and military applications because of the high strength and stiffness to weight ratio of the structures. However, the composites exhibit poor fire resistance because of their high degree of flammability, rapid flame spread, high rate of heat release and, in some cases, production of toxic combustion gases. Many solutions have been proposed for improving the fire resistance of composites and other flammable substrates, for example, addition of halogenated materials to the resin; addition of aluminum trihydrate, borate salts or polyammonium phosphates to the resin; application of intumescent coatings to the substrate and use of thick inorganic fiber mats as insulation. All of these materials have disadvantages, however, such as generation of toxic and corrosive halogenated gases, deterioration in the physical properties of the substrate, the necessity for several time-consuming and labor intensive coating applications, and low abrasion resistance of the protective material.

Protective laminates based on combinations of the materials mentioned above and vapor barrier foils are also known. For example, U.S. Patents 3,934,066; 3,466,222 and 4,467,577 teach the use of intumescent materials such as unexpanded vermiculite, or sheets or foams impregnated with intumescent materials, in combination with metal foils.

The laminate of this invention for protecting a substrate from fire and/or heat is characterized in that it comprises a layer of thermally stable material and a mineral-filled fibrous sheet comprising (1) from 60% to 99% mechanically delaminated vermiculite or a clay mineral, (2) from 1% to 40% of at least one fibrous material, based on the weight of solids, and (3) from 0.1% to 4% of at least one flocculating agent, based on the weight of the mineral filler.

Also according to the invention, the laminates can be used to form a structure comprising these laminates adhered to a resin matrix composite with the thermally stable material of the laminate toward the composite.

Application of the laminates of this invention to a resin matrix composite or other flammable substrate significantly reduces flame spread, heat release and smoke generation without compromising the physical properties of the substrate.

The filler used in the fibrous sheet is mechanically delaminated vermiculite or a clay mineral such as kaolin or mica. Mechanically delaminated vermiculite is preferred. The mineral filler is preferably classified to a particle size of less than 200 microns, most preferably less than 53 microns. Either dry or wet ground vermiculite can be used, but wet ground is preferred.

The fibrous material in the sheet can be one or more types of organic or inorganic fibers or mixtures thereof. Suitable inorganic fibers include, for example, silicon, boron, ceramic, glass, metal and mineral fibers. Suitable organic fibers include, for example, polyester, polyamide, polyolefin, polyimide, polyacrylate, carbon, graphite, polyamide-imide, polyether-imide and phenolic fibers, and cellulosic fibers such as wood pulp, pulped newsprint and bagasse. The type of fiber selected will depend upon the flammability characteristics of the substrate to be protected.

The mineral-filled fibrous sheet is prepared using papermaking or paperboard-making techniques by dispersing the mineral filler in water, adding at least one fibrous material and adding at least one flocculating agent to the dispersion. The flocculated dispersion is then dewatered on a papermaking or paperboard-making machine to form the sheet or board. Typical sheet compositions are 60% to 99%, preferably 80% to 94% mineral filler, based on the total weight of the finished sheet; 1% to 40%, preferably 6% to 20%, of the fibrous material, and 0.1% to 4%, of the flocculant, based on the weight of the mineral filler. The sheet can also contain additives such as other fillers, wet strength agents and fire retardants.

A wide range of thermally stable materials, which act at least partially as vapor barriers, can be used in combination with the mineral-filled fibrous sheet. The term "thermally stable" is meant to include all materials that maintain at least 50% of their room temperature mechanical properties, e.g., tensile strength, burst strength and flex strength, after anaerobic exposure to temperatures below 300°C. These materials include, for example, foils made from aluminum, copper, iron, lead, nickel, cobalt, and zinc as well as alloys of these metals. The metal foil can be coated or treated, e.g., anodized, to improve corrosion resistance, adhesion and/or heat resistance. Perforated foils can also be used. Alternatively, the thermally stable material can be a graphite or carbon sheet material or a layer of a cement or a ceramic such as, for example, silica, alumina or magnesia. In some applications where the laminate is exposed to low temperatures or is exposed to high temperatures or flames for only a short period of time, heat resistant polyimide or phenolic-based polymer films can also be used.

Laminates that have a mineral-filled sheet on both sides of the thermally stable material or that also comprise additional layers such as intumescent materials, insulating materials such as glass mats, or ceramic coatings can also be prepared.

The mineral-filled fibrous sheet can be attached to the thermally stable material using any technique known in the art, for example, by the use of adhesives, by the addition of thermoplastic materials to the fibrous sheet or by mechanical means. Preferred adhesives have high softening points and low heat release values, e.g., ceramic type adhesives such as silica-, alumina-, magnesia-, zirconia-, or silicone-based adhesives. High temperature resistant adhesives such as those based on epoxy, phenolic, bismaleimide, sulfone, polyimide, and polyether resins can also be used.

The laminates of this invention can be fabricated by any of a number of conventional techniques known in the art. For example, the mineral-filled fibrous sheet and the thermally stable material with an adhesive film between them can be fed between two compression rolls. Alternatively, the thermally stable material or the fibrous sheet or both can be sprayed or coated with an adhesive and compression rolled to bond the layers together. When a thermoplastic adhesive film is used, compression under heat is appropriate. Simple fasteners such as staples and tacks can also be used to join the layers.

The laminates of this invention can be used to protect a wide variety of resin matrix composites from the effects of fire and heat. The resins used in the composites typically include thermosets such as, for example, epoxies, bismaleimides, unsaturated polyesters, melamine/formaldehyde, phenolics, furans, silicones, cyanurate esters and acrylates, as well as amorphous and crystalline thermoplastics such as polysulfones, polyethersulfones, polyimides, polyethers, polyetherketones and polyacrylates. Reinforcing fibers such as glass, aramid, ceramic, mineral, boron, carbon, graphite or polymeric materials or mixtures thereof are typically used in such composites. The composites may also comprise polymeric interpenetrating networks that do not require fibers for reinforcement. Other types of fillers as well as common flame retardants for polymers, e.g., aluminum trihydrate or polyammonium phosphate, can also be included.

A laminate/resin matrix composite structure can be fabricated by any of a number of procedures known in the art. For example, a resin-impregnated fiber tape or roll can be layered in a mold with the thermally stable material, an adhesive film and the mineral-filled fibrous sheet, and the assembly compressed and cured. Alternatively, a resin-impregnated fiber tape can be cured and the laminate can be applied in a separate step. When a thermoplastic resin is used as the matrix, press molding can be used. The thermally stable material can also be compressed into the composite followed by application of the mineral-filled sheet by means of an adhesive.

A decorative layer such as one having a wood grain, floral or embossed pattern can be applied over the laminate before or after the resin in the composite is cured. To minimize scratching, the decorative layer can be covered with an abrasion resistant film such as TEDLAR® polyvinyl fluoride film, manufactured by Du Pont. Additional layers such as intumescent materials, insulating materials such as glass mats, or ceramic coatings can be positioned between the protective laminate and the composite.

The laminates of this invention can also be used to protect other heat or fire sensitive substrates such as, for example, wood, polymer film or foam, particle board, mineral board or steel. The substrate can also be in the form of a honeycomb composite structure if desired (see Example 3). In some cases the laminate does not have to be attached to the substrate to be protected, e.g., there may be an air space between the laminate and the substrate to be protected.

Example A

Mechanically delaminated vermiculite is prepared by shearing a mixture of Grade 4 vermiculite ore at 36% by weight in water for two hours on a 15.2 cm (six inch) colloid mill equipped with CARBORUNDUM™ stones followed by sieving to remove particles greater than 53 microns. The vermiculite dispersion is then combined with type S691 glass fibers (7.5 microns in diameter, 0.3 cm (1/8") in length) supplied by Owens-Corning Fiberglass Corp., and unbleached kraft pulp that has been refined to 250 Canadian Standard Freeness. The ratio of vermiculite/glass/wood pulp is 88/6/6 based on the weight of the vermiculite.

Water is added to reduce the solids of the dispersion to 0.5 wt %. KYMENE® 557H cationic resin (Hercules Incorporated) and RETEN® 523P anionic acrylamide copolymer (Hercules Incorporated) are used as the flocculants and are delivered at the first mixbox and fan pump, respectively, of a flat wire Fourdrinier paper machine. The level of flocculant is 2.5% and 1.2 % respectively, based on the weight of vermiculite. The sheet, which is referred to as VICS in the following tables, has a basis weight (BW) of 0.37 kg/m$^2$ (230 lb/3000 ft$^2$) and a thickness of 0.043 cm (17 mils).

Example B

The procedure used in Example A is followed except #6 Tile kaolin (Georgia Kaolin) is used in place of the vermiculite to produce the sheet. The ratio of kaolin/woodpulp/glass is adjusted to 82/12/6 to improve machine processability. The sheet has a basis weight of 0.37 kg/m$^2$ (240 lb/3000 ft$^2$) and a thickness of 0.043 cm (17 mils).

Example C

Twenty-two layers of prepreg tape composed of type 3501-6 epoxy resin and type IM-6 graphite fiber (Hercules Incorporated) are laid up by hand in an alternating 0°, 90° configuration, vacuum bagged, and cured under standard conditions.

Curing conditions are as follows: The composite assembly is placed under full vacuum, the temperature is raised to 210°F (99°C) and the composite is soaked for 60 minutes. The vacuum is released, 6.3 kg/cm$^2$ (90 psig) nitrogen pressure is applied and the temperature is raised to 355°F (179°C). After two hours, the pressure is released and the composite is cooled and removed from the mold. The cured composite plaques are approximately 0.32 cm (125 mils) thick.

To prepare the protected composite structures of this invention, .003 cm (1 mil) aluminum foil is applied to the prepreg and vacuum bagged, and the composite is cured in the same manner as the graphite/epoxy control. The VICS sheet, prepared as described in Example A, is applied in a separate step using an epoxy resin adhesive film (FM 123, American Cyanamid Co.) and cured at 125°C under 3.16 kg/cm$^2$ (45 psig) pressure according to standard cure conditions.

Example 1

Samples of the protected graphite/epoxy composite prepared as described in Example C and the unprotected control are submitted to the ASTM E662 procedure for determining optical smoke density. The results are shown in Table I. The low optical smoke density value of the protected composite after 5 minutes is evidence of the flame and fire protection of the resin matrix composite by the laminate.

## Table I

### Optical Smoke Density – ASTM E662
### Radiant Heat Flux of 25 KJ/sec. m$^2$ (25KW/m$^2$)

|  | Unprotected Control | Protected Composite |
|---|---|---|
| **Smoke density at 4 min.** |  |  |
| Flaming | 53 | 2 |
| Smoldering | 1 | 1 |
| **Maximum smoke density of the five minute test** |  |  |
| Flaming | 132 | 21 |
| Smoldering | 31 | 5 |

Example 2

Samples of the protected graphite/epoxy composite prepared as described in Example C and the unprotected control are submitted to the ASTM E906 procedure for determining the rate of heat release. The results are shown in Table II. The protective laminate significantly slows the rate of heat release as well as delaying the time before peak heat release.

4

Table II

| Rate of Heat Release - ASTM E906 Radiant Heat Flux of 35 KJ/sec. m$^2$ (35KW/m$^2$) | | | | | |
|---|---|---|---|---|---|
| | Total Heat Release (Q) KW-min/m$^2$ | | | Heat Release Rate | |
| | Time (Min) | | | Peak KW/m$^2$ | Peak Time (Min) |
| | 0:30 | 1:00 | 2:00 | | |
| Unprotected Control | 0:0 | 0.9 | 67.7 | 93.4 | 1:59 |
| Composite protected with 230 VICS/ FM 123/0.003 cm (1 mil) Al | 0:0 | 0.0 | 13.8 | 69.0 | 3:29 |

Example 3

The rate of heat release from samples of an unprotected aircraft interior honeycomb assembly and a honeycomb protected by a 230 VICS/FM123/1 mil Al laminate is determined according to the ASTM E906 test procedure. The honeycomb consists of two plies of prepreg tape composed of type 3501-6 epoxy resin and type IM-6 graphite fiber (Hercules Incorporated) on both sides of a 1.3 cm (1/2") NOMEX phenolic honeycomb core (Du Pont). The laminate is adhered to the honeycomb with an epoxy resin adhesive film (FM 123, American Cyanamid). The results are given in Table III and are an average for three tests. The data indicate that the rate of heat release of the protected honeycomb is slow compared to the unprotected control.

Table III

| Rate of Heat Release - ASTM E906 Radiant Heat Flux of 35 KJ/sec. m$^2$ (35KW/m$^2$) | | | |
|---|---|---|---|
| | Total Heat Release (Q) KW-min/m$^2$ | | |
| | Time, Minutes | | |
| | 0:30 | 1:00 | 2:00 |
| Graphite-Epoxy Honeycomb Control | 8.20 | 29.0 | 47.3 |
| 230 VICS/FM123/0.003 cm (1 mil) Al Protected Honeycomb | 1.0 | 17.1 | 26.1 |

Example 4

The ability of the protective laminates to reduce the flame spread of a resin matrix composite is determined according to ASTM D 3807-79 in an inclined 61 cm (2 foot) tunnel. Flame spread measurements are made every fifteen seconds for a total burn time of four minutes. Measurements are made on the unprotected graphite/epoxy (CE) control, on composites protected with the VICS/foil laminates of this invention, and on composites protected with foil alone and with commercially available protective materials. The results are given in Table V. Total flame spread is defined as the area under the curve in a plot of flame spread in inches vs burn time in minutes. The symbol ">" in front of the total flame spread measurement indicates that the flame went beyond the end of the tunnel. The weight loss of the protected composites as well as the unprotected control is also measured. Weight loss can be related via mathematical equations to the fuel contributed to the fire by the material being tested. Low weight loss indicates good protection of the substrate. The composition of the fibrous sheets used in Examples 5 and 6 is given in Table IV.

The results in Table V demonstrate that there is a synergistic improvement in flame spread reduction when the VICS and foil are used together as compared to the VICS or foil used alone. The data for alumina and FLEXFRAM (Fiber Materials, Inc.), both of which are commercially available ceramic coatings, show minimal protection of the composite. The data also reveal that the combination of VICS and Al foil outperforms FORTIGLAS®, a chemically exfoliated vermiculite-treated glass mat (ICI), over Al foil.

TABLE IV

| Materials | Description | Basis Weight kg/m$^2$ | Nominal Thickness cm (mils) |
|---|---|---|---|
| Mechanically Delaminated Vermiculite Sheet (VICS) | 88/6/6 (vermiculite/glass/wood pulp) | 0.37 | 0.043 (17) |
| Kaolin Sheet (KICS) | 82/6/12 (kaolin/glass/wood pulp) | 0.39 | 0.043 (17) |
| Alumina (ATH) (Mead Paper) | alumina trihydrate/glass | 0.20 | 0.025 (10) |
| MANNIGLASS® 1150 (Lydall, Inc.) | thermally-exfoliated vermiculite-filled random glass mat | 0.16 | 0.051 (20) |
| FORTIGLAS® (ICI) | chemically exfoliated vermiculite-coated random glass mat | 0.10 | 0.038 (15) |
| MANVILLE 81 (Manville Corp.) | random glass mat | 0.04 | 0.025 (10) |

TABLE V

| TWO FOOT FLAME TUNNEL COMPOSITE FLAME SPREAD PERFORMANCE USING A MODIFIED ASTM D-3807-79[a] METHOD | | |
|---|---|---|
| | Total Flame Spread (m) | Weight Loss (g) |
| Graphite/Epoxy Control (b) | >3.5 | 7.0 |
| Composite Protected with: 230 VICS/FM 123 (c) | >3.5 | 4.7 |
| 230 VICS/FM 123/.003 cm (1 mil) Al | >1.5 | 3.8 |
| 230 VICS/FM 123/.004 cm (1.4 mil) Cu (d) | 2.8 | 7.8 |
| .003 cm (1 mil) Al | >4.0 | 5.3 |
| .006 cm (2.5 mil) Al (e) | 1.8 | 5.5 |
| Alumina Coating (0.19 g/cm$^2$) | >3.9 | 7.0 |
| FLEXFRAM Coating (0.14 g/cm$^2$) | >4.4 | 13.0 |
| FORTIGLAS/FM 123/.003 cm (1 mil) Al | >4.6 | 5.5 |

(a) Gas flow increased to 176 liter/hr from 57 liter/hr. Natural gas burner with propane burner head used throughout.
(b) Alternating 0°, 90° 22 plies of Hercules Incorporated 3501-6/IM-6 prepreg (CE).
(c) FM 123 = epoxy adhesive sheet.
(d) Cu foil delaminated from resin matrix due to adhesive failure.
(e) Flame length over nonburning control is 40.6 cm (16") rather than 30.5 cm (12").

Example 5

The protective performance of the mineral-filled fibrous sheet/Al foil laminates of this invention compared to commercially available mineral-filled fibrous sheets with one mil Al foil, all applied over the graphite/epoxy composite prepared as described in Example C, is summarized in Table VI. The fibrous sheets are described in Table IV. It should be noted that the data were collected under higher flame conditions than those used in Example 4, i.e., the flame length is 40.6 cm (16") rather than 30.5 cm (12").

The data reveal that the laminates of this invention out-perform all of the other laminated materials. The data also show that the performance of the laminates of this invention improves as the Al foil thickness is increased from .003 cm (1 mil) to 0.013 cm (5 mils).

## Table VI

### Two Foot Flame Tunnel Test Results
### (ASTM D 3806-79; CSI CS-196 Tunnel)

Glass Flow = 16.5 KBTU/hr    Nonburning Control = 40.6 cm (16")

| Protective Laminate | Total Flame Spread (m) | Weight Loss (g) |
|---|---|---|
| 230 VICS/FM123/.003 cm (1 mil) Al foil | >2.1 | 3.32 |
| 240 KICS/FM123/.003 cm (1 mil) Al foil | >2.5 | 5.16 |
| 120 ATH/FM123/.003 cm (1 mil) Al foil | >2.9 | 7.42 |
| MANNIGLAS®/FM123/.003 cm (1 mil) Al foil | >3.0 | 6.24 |
| FORTIGLAS®/FM123/.003 cm (1 mil) Al foil | >2.6 | 6.24 |
| MANVILLE 81/FM123/.003 cm (1 mil) Al foil | >2.6 | 6.34 |
| 230 VICS/FM123/.013 cm (5 mil) Al foil | .9 | 2.05 |
| .013 cm (5 mil) Al foil | >2.5 | 5.00 |

Example 6

A protective laminate consisting of 230 basis weight VICS adhered to .003 cm (1 mil) Al foil with a polyvinyl acetate adhesive is applied to a variety of thermoset resin matrix composites currently being used in transportation, aerospace, and military applications. The VICS/foil laminate is applied to the resin matrix composite using a two part, room temperature epoxy adhesive (MARINE-TEX®, Travaco Laboratories, Inc.), except in the case of the silicone composite where a silicone adhesive is used. The flame spread is determined as in Example 4. All results are based on duplicate analyses. The results are given in Table VII. For the thermoplastic composites described in Table VIII, the VICS/foil laminate is applied to the composite with MARINE-TEX® epoxy adhesive. All samples are wrapped in .002 cm (0.7) mil Al foil and sealed with tape around the back and edges of the sample, leaving the front exposed to the flame.

The results shown in Tables VII and VIII demonstrate that the VICS/foil laminate can be used to protect resin matrix composites that incorporate both thermoset and thermoplastic resins.

## TABLE VII

### Two Foot Flame Tunnel Flame Spread Performance
### Using a Modified ASTM D3807-79 Method[a]

| Thermoset Resin Composite[b] | Total Flame Spread (m) | | Wt. Loss (g) | |
|---|---|---|---|---|
| | As Received | Protected | As Received | Protected |
| Flame retarded (FR) polyester/random glass (GPO-2) | >4.7 | >2.9 | 17.2 | 9.1 |
| Flame retarded polyester/random glass (higher FR loading) (GPO-3) | >4.5 | 2.0 | 20.3 | 9.9 |
| Melamine/glass mat (G-9) | >3.7 | 2.4 | 17.8 | 12.3 |
| Flame retarded epoxy/glass mat (FR-4) | >4.3 | 2.4 | 31.2 | 20.2 |
| Phenolic/glass mat (G-3) | >1.7 | >2.7 | 9.2 | 5.5 |
| Silicone/glass mat (G-7) | 3.2 | 1.0 | 1.7[c] | 1.3[c] |

(a) Gas flow increased to 176 l/hr from 57 l/hr. Standard propane burner used in these evaluations.

(b) Resin matrix panels were purchased from Franklin Fiber-Lamitex Corp. All were 0.3 cm (1/8") thick except the phenolic, which was 0.6 cm (1/4") thick. Pyrolyzable resin contents 35% to 53%. Panel types are indicated by trade designations GPO-2, etc.

(c) Conversion of $Si(CH_3)_2O$ to $SiO_2$ results in the low observed wt. loss.

(d) High flame spread value is due to formation of a single jet along the length of the tunnel.

TABLE VIII

Two Foot Flame Tunnel Evaluations
Using a Modified ASTM D3807-79 Method[a]

| Thermoset Resin Composite | Total Flame Spread (m) | | Wt. Loss (g) | |
|---|---|---|---|---|
| | As Received | Protected | As Received | Protected |
| Polyphenylene Oxide/glass (NORYL®, General Electric) | >4.7 | >3.9 | 17.8 | 7.5 |
| Polycarbonate (LEXAN®, General Electric) | >3.8 | >3.4 | 15.7 | 11.7 |

(a) All flame spreads determined at a gas flow of 176 l/hr, flame length 30.5 cm (12") (16,500 BTU/hr)

Example 7

A protective laminate consisting of 230 basis weight VICS adhered to a .013 cm (5 mil) GRAFOIL® graphite sheet (Union Carbide) with a polyvinyl acetate adhesive is applied to a polyester/glass composite (GPO-1) using a two part, room temperature epoxy adhesive (MARINE-TEX®, Travaco Laboratories, Inc.). The polyester/glass composite was purchased from Franklin Fiber-Lamitex Corp. The total flame spread of the protected composite as well as the unprotected control is determined as in Example 4. The results are given in Table IX. The results indicate that a graphite sheet is suitable for use as the thermally stable material in the protective laminate.

Table IX

| Two Foot Flame Tunnel Flame Spread Performance Using a Modified ASTM D3807-79 Method[a] | | | |
|---|---|---|---|
| Total Flame Spread m (inches) | | Weight Loss (g) | |
| As Received | Protected | As Received | Protected |
| 4.3 (171) | 1.3 (50) | 20.0 | 6.8 |

(a) All flame spreads determined at a gas flow of 176 l/hr, flame length 30.5 cm (12") (16,500 BTU/hr).

## Claims

1. A laminate for protecting a substrate from fire and/or heat characterized in that it comprises a layer of thermally stable material and a mineral-filled fibrous sheet comprising from 60% to 99% mechanically delaminated vermiculite or a clay mineral, from 1% to 40%, based on the weight of solids, of at least one fibrous material, and from 0.1% to 4%, based on the weight of the mineral filler, of at least one flocculating agent.

2. The laminate of claim 1 further characterized in that the thermally stable material is a metal foil.

3. The laminate of claim 2 further characterized in that the metal is aluminum.

4. The laminate of claims 1 or 2 further characterized in that the thermally stable material is a carbon or graphite sheet.

5. The laminate of any of the preceding claims further characterized in that the thermally stable material is aluminum foil and the mineral filler is mechanically delaminated vermiculite.

6. The laminate of any of the preceding claims further characterized in that the fibrous material is a mixture of wood pulp and glass fibers.

7. The laminate of claim 5 further characterized in that the mechanically delaminated vermiculite is prepared by wet milling of vermiculite ore.

8. The laminate of any of the preceding claims further characterized in that the mineral filler has a particle size of less than 53 microns.

9. The laminate of any of the preceding claims further characterized in that the mineral-filled sheet is made by conventional papermaking or paperboard-making methods.

10. Use of the laminate of claims 1-9 to protect a honeycomb composite structure.

11. Use of the laminate of claims 1-9 to protect a resin matrix composite characterized in that the layer of thermally stable material in the laminate is toward the composite.

12. The use of claim 11 further characterized in that the resin in the composite is a thermoset resin.

13. The use of claim 11 further characterized in that the resin in the composite is a thermoplastic resin.

**14.** The use of claim 11 further characterized in that an additional layer is positioned between the laminate and the resin matrix composite.